# EUROPEAN PATENT SPECIFICATION

(11) **EP 4 214 147 B1**
(45) Date of publication and mention of the grant of the patent: **04.11.2026**
(21) Application number: 21867974.4
(22) Date of filing: 08.09.2021
(51) Int. Cl.: B65G 49/00, A21B 1/26, A21B 1/48, F25D 13/06, F26B 3/04, F26B 15/26, F26B 21/20, B65G 21/18

(54) **HORIZONTAL AND RADIAL AIRFLOW HEAT TRANSFER SYSTEM**
HORIZONTALES UND RADIALES LUFTSTROMWÄRMEÜBERTRAGUNGSSYSTEM
SYSTÈME DE TRANSFERT DE CHALEUR À FLUX D'AIR HORIZONTAL ET RADIAL

(30) Priority: 21.09.2020 US 202063081090 P
(43) Date of publication of application: 26.07.2023
(73) Proprietor: FPS Food Process Solutions Corp., Richmond, British Columbia V6W 0A1 (CA)
(72) Inventor: CHANG, Kin Hung Jeffrey, Richmond, British Columbia V6W 0A1 (CA)
(74) Representative: AWA Sweden AB
(86) International application number: PCT/CA2021/051236
(87) International publication number: WO 2022/056620

(56) References cited:
- WO-A1-97/24569
- GB-A- 1 142 954
- US-A- 4 612 780
- US-A- 4 953 365
- US-A- 4 953 365
- US-A- 5 335 590
- US-A1- 2004 011 627
- US-A1- 2004 011 627
- US-A1- 2012 273 165
- US-A1- 2016 324 194

## Description

### BACKGROUND

### 1. Field

This application generally relates to a system for altering a temperature of a product carried by a conveyor belt with airflow. This application more particular relates to a system for generating and directing horizontal and radial airflow through a conveyor stack formed by the conveyor belt to alter the temperature of the product carried by the conveyor belt.

### 2. Description of Related Art

Conveyor belts are typically used for conveying bulk products, such as foodstuffs, that must be transported through a cooled or heated environment. In such applications, it is often desirable to maximize the time of transport within the cooled or heated environment and transport goods along a extend travel path of travel. Stacked conveyor belts (such as spiral conveyor belts) include conveyor belts which form conveyor stacks having a plurality of tiers which are stacked on top of each other and may transport the bulk products along an extended travel path while utilizing minimal floor space. Further, self-stacking conveyor belts may provide an extended travel path with minimal framing. A self-stacking conveyor belt uses side plates coupled to side edges of a central portion of the conveyor belt to form a self-supporting stack having a plurality of tiers, with lower tiers of the plurality of tiers being supported by a frame, but the upper tiers of the plurality of tiers being supported directly by the lower tiers. The interface between stacked tiers of the plurality of tiers are generally designed to keep the portion of the conveyor belt within the self-supporting stack supported and laterally aligned, and may include guards and other align.

In conveyor systems utilizing stacked conveyor belts, there are generally two different types of airflow used to cool or heat product carried by the conveyor belt. The first type is vertical airflow, which involves forcing airflow from either the ceiling or the floor through the stack of the conveyor belting and out the opposite end (floor or ceiling). The second type is horizontal airflow, which involves airflow entering from one side of the conveyor stack and exiting out of the other side of the conveyor stack so that the airflows horizontally across the conveyor belts.

However, utilizing vertical airflow can result in loss of pressure as the airflow travels through the different tiers of the conveyor stack, which may result in less efficient cooling or heating. This loss of pressure can be particularly acute in large conveyor systems utilizing conveyor belts stacked into a large plurality of tiers. Further, stacking conveyor belts, and particularly self-stacking conveyor belts, often prevent adequate horizontal airflow. Further still, horizontal airflow is typically generated on only one side of the conveyor stack, so the side of the conveyor stack proximate the horizontal airflow generator will receive more airflow than the other side of the conveyor stack distant from the horizontal airflow generator, resulting in lower performance.

US2016/324194A1 discloses a spiral freezer system including a spiral stack contained within an insulated freezer chamber. The spiral stack is formed from a conveyor belt and includes a plurality of tiers, whereby each tier forms a previous annulus through which treatment gas may flow. When formed into a spiral stack, the plurality of tiers also create an inner cylindrical channel through which the treatment gas may also travel. A horizontal partition or mezzanine located outside of the spiral stack functions to divide the freezer chamber into a higher pressure atmospheric zone and a lower pressure atmospheric zone. The stack further includes a lower internal sheeting, positioned at a height of the stack below the mezzanine, which blocks the downward vertical flow of treatment gas inside the inner cylindrical channel of the stack and directs vertical flow radially outward across the stack. The stack further includes an upper internal sheeting located within the inner cylindrical channel of the stack above the mezzanine and which selectively allows the treatment gas to flow vertically downward through the inner cylindrical channel of the stack via adjustable openings.

GB1142954A discloses a refrigeration system including a centrally located baffle or shelf (partition) in an enclosure, the baffle or shelf forming a stratification means. Air is blown by a fan over matter to be treated on upper runs of a conveyor (located above the partition), which allows the matter travelling on the upper runs of the conveyor to be subjected to colder air than that on the lower ones of the conveyor beneath the partition.

US2012/0273165A1 discloses a spiral heat transfer system used to cool or freeze, or heat or bake, products such as food products. The system includes a drum and a spiral belt located in a chamber. A baffle separates upper and lower portions of the chamber. Upper tiers of the spiral belt are located in the upper portion and lower tiers of the spiral belt are located in the lower portion.

US2004/011627A1 discloses a helical or spiral conveyor belt system which includes a conveyor belt arranged in the stacked, helical configuration, with various tiers etc. stacked serially and directly on one another. The conveyor belt may be made from different conveyor belt modules including support members or spacer frames which support the conveyor belt tier immediately above a current tier.

### SUMMARY

In one embodiment, there is provided a heat transfer system for altering a temperature of product with airflow, according to claim 1. The system includes a conveyor belt for carrying the product.

The conveyor belt has an air permeable outer side wall and an air permeable inner side wall and forms a conveyor stack having a plurality of tiers and a central space with a volume. The conveyor stack is positioned in a chamber such that a first portion of the volume of the central space and a first plurality of tiers of the plurality of tiers is located in a first sub-chamber of the chamber and a second portion of the volume of the central space and a second plurality of tiers of the plurality of tiers is located in a second sub-chamber of the chamber. The system further comprises a baffle dividing the chamber into the first sub-chamber and the second sub-chamber. The baffle is coupled to the conveyor stack and configured to substantially restrict the airflow in a vertical direction directly between the first sub-chamber and the second sub-chamber, except within the volume of the central space between the second portion of the volume of the central space and the first portion of the volume of the central space. The system further includes generating means for generating the airflow in the chamber. The generating means is configured to: produce, in the second sub-chamber, the airflow in a horizontal direction towards the conveyor stack, such that the airflow flows in a horizontal and radial direction across the second plurality of tiers to enter the second portion of the volume of the central space; and draw, in the first sub-chamber, the airflow in a horizontal direction away from the conveyor stack, such that the airflow flows in a horizontal and radial direction to exit the first portion of the volume of the central space across the first plurality of tiers.

Disclosed is also a method of assembling a heat transfer system for altering a temperature of products using airflow. The method involves positioning a conveyor stack formed by a plurality of tiers of a conveyor belt for carrying the product, the conveyor belt including an air permeable outer side wall and an air permeable inner side wall and the conveyor stack having a central space with a volume, in a chamber such that a first portion of the volume of the central space and a first plurality of tiers of the plurality of tiers is located in a first sub-chamber of the chamber and a second portion of the volume of the central space and a second plurality of tiers of the plurality of tiers is located in a second sub-chamber of the chamber. The method further involves positioning generating means for generating the airflow in the chamber proximate the conveyor stack. The generating means is operably configured to: produce, in the second sub-chamber, the airflow in a horizontal direction towards the conveyor stack, such that the airflow flows in a horizontal and radial direction across the second plurality of tiers to enter the second portion of the volume of the central space; and draw, in the first sub-chamber, the airflow in a horizontal direction away from the conveyor stack, such that the airflow flows in a horizontal and radial direction to exit the first portion of the volume of the central space across the first plurality of tiers.

In another embodiment, there is provided a method, according to claim 13, of altering a temperature of product carried on a conveyor belt having an air permeable outer side wall and an air permeable inner side wall and forming a conveyor stack having a plurality of tiers and a central space with a volume. The conveyor stack is positioned in a chamber. The method involves producing, in a second sub-chamber of the chamber, the airflow in a horizontal direction towards the conveyor stack, such that the airflow flows in a horizontal and radial direction across a second plurality of tiers of the plurality of tiers to enter a second portion of the volume of the central space. The method further involves drawing, in a first sub-chamber of the chamber, the airflow in a horizontal direction away from the conveyor stack, such that the airflow flows in a horizontal and radial direction to exit a first portion of the volume of the central space across a first plurality of tiers of the plurality of tiers. A baffle is coupled to the conveyor stack. Said baffle is configured to divide the chamber into the first sub-chamber and the second sub-chamber and to substantially restrict the airflow in a vertical direction directly between the first sub-chamber and the second sub-chamber, except within the volume of the central space between the second portion of the volume of the central space and the first portion of the volume of the central space.

Other aspects and features of the present disclosure will become apparent to those ordinarily skilled in the art upon review of the following description of specific embodiments of the disclosure in conjunction with the accompanying Figures.

### BRIEF DESCRIPTION OF THE DRAWINGS

In drawings which illustrate embodiments,
- Figure **1**: is an elevation view of a heat transfer system in accordance with one embodiment.
- Figure **2**: is a perspective view of a conveyor system of the heat transfer system in **Figure 1** **in accordance with one embodiment.**
- Figure **3**: is a perspective view of a belt module of a conveyor belt of the conveyor system shown in Figure **1** and **2** in accordance with one embodiment.
- Figures **4**A and **4**B: are, respectively, a cross-sectional plan view of the heat **transfer** system of Figure **1** at line **4-4** in a second sub-chamber and an elevation view of airflow across the belt module of Figure 3 in the second sub-chamber in accordance with one embodiment.
- Figures **5**A and **5**B: are, respectively, a cross-sectional plan view of the heat transfer system of Figure **1** at line **5-5** in a first sub-chamber and an elevation view of airflow across the belt module of Figure 3 in the first sub-chamber in accordance with one embodiment.
- Figure 6: is a perspective view of a driving drum which may engage a conveyor stack of the conveyor system shown in Figures 1 and 2 in accordance with one embodiment.

### DETAILED DESCRIPTION

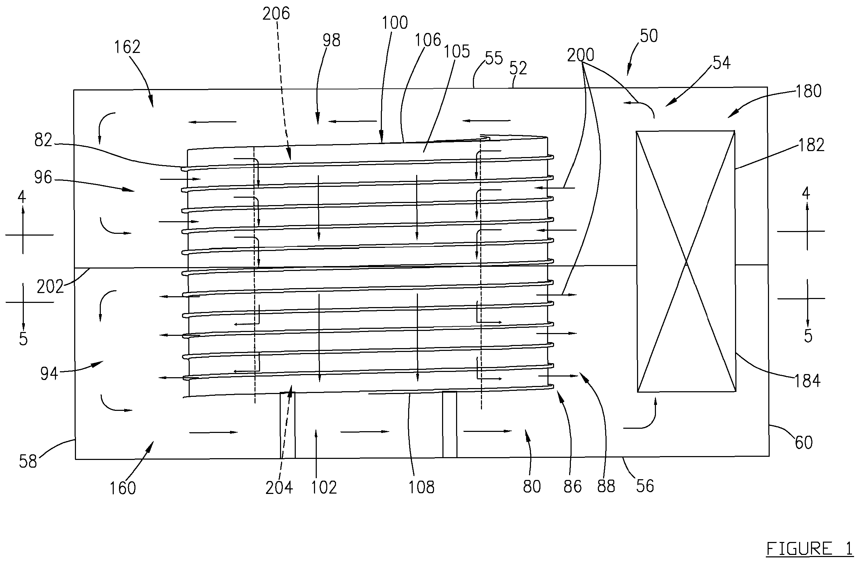

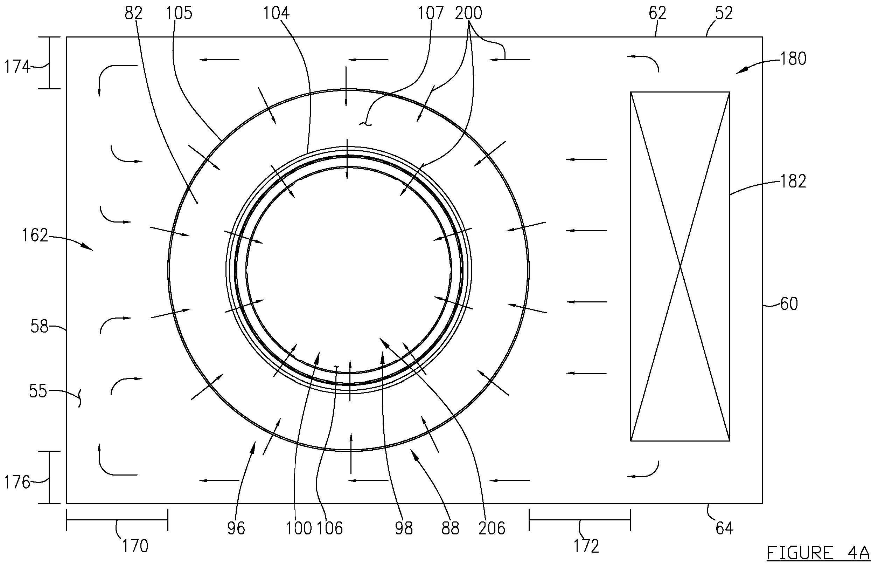

Referring to Figure 1, a radial and horizontal airflow heat transfer system is shown generally at 50. The heat transfer system **50** is used to cool, freeze, heat, dry, bake or otherwise cook products (not shown), such as food products or plant products. The heat transfer system **50** includes a housing **52** with an internal cavity or chamber 54. The housing **52** is constructed of any suitable material for cooling, freezing, heating, drying, baking or cooking applications within the chamber 54. In the embodiment shown in Figure 1, the housing **52** includes a top wall **55,** bottom wall **56,** first end wall **58,** second end wall **60,** a first side wall **62** (shown in Figure 4A) and a second side wall **64** (shown in Figure 4A). Other embodiments may include fewer or more walls. The walls **55, 56, 58, 60, 62** and **64** are substantially impermeable to air such that airflow **200** generated by generating means **180** (described in greater detail below) of the heat transfer system **50** deflects from the walls **55, 56, 58, 60, 62, 64** upon contact with the walls **55, 56, 58, 60, 62, 64** and remains in the chamber 54.

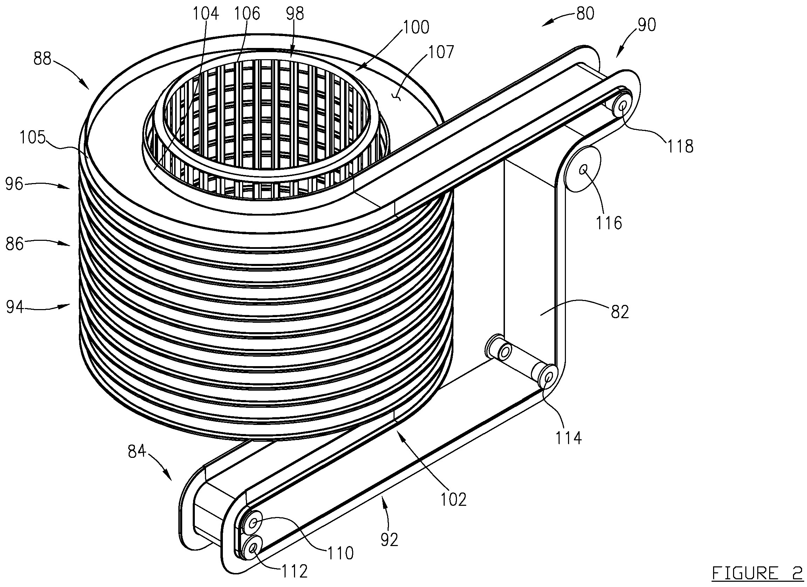

The heat transfer system **50** also includes a conveyor system **80** including a conveyor belt 82. The conveyor belt **82** includes an air permeable inner side wall **104,** an air permeable outer side wall 105 and a conveying portion **107** extending between the inner side wall **104** and the outer side wall **105** for carrying product. In certain embodiments, the conveying portion **107** may be restrict airflow in a vertical direction through the conveying portion 107. Referring to Figures 1 and **2****,** the conveyor belt **82** may be an endless conveyor belt having a travel path from a lower input **84** where product is placed onto the conveyor belt **82,** to a plurality of turns of the conveyor belt **82** forming a conveyor stack **88** having a plurality of tiers **86,** and then to an upper output **90** where product is removed from the conveyor belt **82.** In the embodiment shown in Figures 1 and **2****,** the conveyor stack **88** is a spiral helical stack, and the travel path of the conveyor belt **82** through the conveyor stack **88** comprises a helical travel path. In other embodiments (not shown), the conveyor stack **88** may be stacked in a different configuration.

The conveyor stack **88** includes a volume of a central space **98** having a top opening **100** and a bottom opening **102,** and having a lateral surface generally defined by the inner wall **104** of the conveyor belt **82.** The top opening **100,** the bottom opening **102** and the inner wall **104** may define the volume of the central space **98.** In the embodiment shown in Figure **1****,** the heat transfer system **50** further includes a top end wall **106** positioned at the top opening **100** of the conveyor stack **88** and which is configured to substantially restrict airflow into or out of the volume of the central space **98** through the top opening **100.** The heat transfer system **50** further includes a bottom end wall **108** positioned at the bottom opening **102** of the conveyor stack **88** and which is configured to substantially restrict airflow into and out of the volume of the central space **98** through the bottom opening **102.** In other embodiments (not shown), the heat transfer system **50** may not include at least one of the top end wall **106** and the bottom end wall **108.**

As noted above, the travel path of the conveyor belt **82** involves the conveyor belt **82** being fed into the conveyor stack **88** from the lower input **84** and being fed out of the conveyor stack **88** from the upper output **90.** However, in other embodiments (not shown), this configuration may be reversed, such that the travel path of the conveyor belt **82** may be fed into the conveyor stack **88** from the upper output **90** and may be fed out of the conveyor stack **88** from the lower input **84.** In certain embodiments (not shown), the lower input **84** and the upper output **90** may be located within the chamber **54,** such that the entire conveyor system **80** (shown in Figure **2****)** is located entirely within the chamber **54.** In other embodiments, the lower input **84** and the upper output **90** may be located outside of the chamber **54,** such that only the conveyor stack **88** of the conveyor system **80** is located entirely within the chamber 54. For example, the lower input **84** maybe positioned on an outer side of the first end wall **58** of the housing **52** and the upper output **90** may be positioned on an outer side of the second end wall **60** of the housing **52,** or both The lower input **84** and the upper output **90** may be positioned on an outer side of the first side wall **62** of the housing 52.

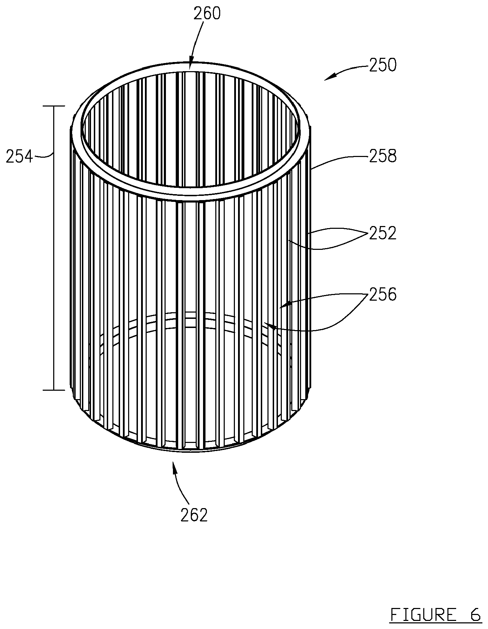

Still referring to Figures 1 and **2****,** the conveyor belt **82** may be a self-stacking conveyor belt, such that each tier of the plurality of tiers **86** of the conveyor stack **88** are stacked serially and directly on top of a previous tier of the plurality of tiers 86. As such, the conveyor belt **82** may be configured to rotate and convey products vertically along the travel path and through the conveyor stack **88** without a central driving drum positioned within the central space **98** of the conveyor stack **88.** Referring to Figure **2****,** the conveyor belt **82** maybe fed around rollers **110** and **112** proximate the lower input **84,** roller **114** proximate the linking portion **92,** and rollers **116** and **118** proximate the upper output **90.** The rollers **110, 112, 114, 116** and **118** may drive the conveyor belt **82** along the travel path and through the conveyor stack **88.** In this respect, the rollers **110, 112, 114, 116** and **118** may be associated with sprockets having a motor to drive the movement of the conveyor belt **82** along the travel path of the conveyor belt **82.** In other embodiments (not shown), the conveyor belt **82** maybe driven by more or fewer rollers, and such rollers may be located at different locations along the conveyor belt **82.** In yet other embodiment, the conveyor system **80** may include a central driving drum (described in greater detail below in association with Figure **6****)** located within the central space **98** of the conveyor stack **88** and which engages the inner side wall **104** of the conveyor belt **82** to rotate the conveyor belt **82** through the conveyor stack **88** and along the travel path of the conveyor belt **82.** Utilizing a combination of the central driving drum with rollers (such as the rollers **110, 112, 114, 116** and **118)** may result in more rapid rotation of the conveyor belt **82** through the conveyor stack **88,** and more rapid travel of the conveyor belt **82** along the travel path of the conveyor belt **82.**

In other embodiments (not shown), the conveyor belt **82** maybe a different type of conveyor belt, such as a platform-supported or wearstrip-supported conveyor belt having a support platform or wear strip under each tier of the plurality of tiers **86.** Such embodiments of the conveyor system **80** generally include the central driving drum located within the central space **98** of the conveyor stack **88.** In embodiments where the conveyor system **80** includes a central driving drum to rotate the conveyor belt **82** along the travel path and the conveyor stack **88,** such central driving drums generally include a lateral wall which is substantially air permeable (described in greater detail below in association with Figure 6) to cooperate with the air permeable configuration of the inner and outer side walls **104** and **105** of the conveyor belt **82** to facilitate airflow in a horizontal and radial direction across the conveyor stack **88** and in a horizontal and radial direction to enter and exit the volume of the central space **98.**

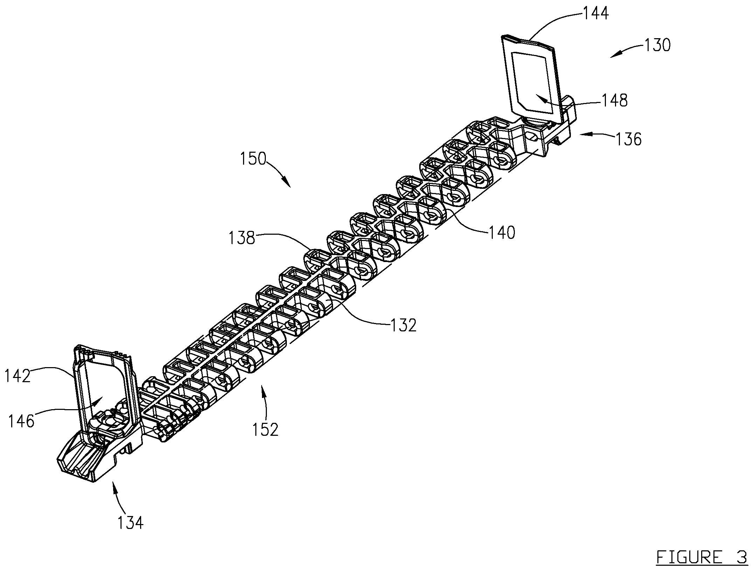

The conveyor belt **82** may be constructed of a series of belt modules, where in each belt module may be similar to belt module **130** shown in Figure **3** for example. The belt module **130** includes a central portion **132** laterally extending between an inner side **134** of the conveyor belt **82** and an outer side **136** of the conveyor belt **82.** The central portion **132** may include connector elements (not shown) for connecting one belt module **130** to an adjacent belt module to form the conveyor belt **82.** For example, the central portion **132** may include grooves and protrusions (not shown) on both a leading edge **138** of the central portion **132** and a trailing edge **140** of the central portion **132.** The grooves may be configured to receive corresponding protrusions of a central portion of an adjacent belt module, and the protrusions may be configured for insertion into corresponding grooves of the central portion of the adjacent belt module to couple the belt module **130** to an adjacent belt module. Additionally, the protrusions of the central portion **132** of the belt module **130** may include openings which align when the protrusions are received in the corresponding grooves of adjacent belt modules, and the aligned openings may be configured to receive a rod element to more securely couple adjacent belt modules. At least one of the openings proximate the inner side **134** of the conveyor belt **82** or protrusions proximate the outer side **136** of the conveyor belt **82** may be elongated longitudinally to allow the conveyor belt **82** to collapse and expand while the conveyor belt **82** is traveling through the conveyor stack **88.**

The belt module **130** further includes an inner side plate **142** and an outer side plate **144.** The inner side plate **142** is coupled to the central portion **132** proximate the inner edge **134** of the conveyor belt **82** and the outer side plate **144** is coupled to the central portion **132** proximate the outer edge **136** of the conveyor belt **82.** The inner side plates **142** of coupled adjacent belt modules **130** generally form the inner side wall **104** of the conveyor belt **82** and generally defines the lateral surface of the volume of the central space **98** of the conveyor stack **88.** The outer side plates **144** of coupled adjacent belt modules **130** generally form the outer side wall **105** (shown in Figure **1** and **2****)** of the conveyor belt **82.**

The inner and outer side plates **142** and **144** are configured to facilitate horizontal airflow around product conveyed by the conveyor belt **82,** such as product placed on the central portion **132** of the belt module **130.** In this respect, the inner and outer side plates **142** and **144** may be made from a material or have a configuration which provide the inner and outer side walls **104, 105** of the conveyor belt **82** with a substantially air permeable configuration, to enable to enable airflow in a horizontal and radial direction through the outer side wall **105** and then the inner side wall **104** of the conveyor belt **82** to enter the volume of the central space **98** of the conveyor stack **88,** and to enable the airflow in a horizontal and radial direction to exit the volume of the central space **98** of the conveyor stack **88** through the inner side wall **104** and then the outer side wall **105** of the conveyor belt **82.** For example, in the embodiment shown in Figure **3****,** the inner side plate **142** includes at least one aperture 146 and the outer side plate 144 includes a corresponding at least one aperture 148. The at least one apertures **146** and **148** facilitate horizontal airflow across the central portions 132 of coupled belt modules 130, to heat or cool the product carried on the central portions 132 of the belt modules 130, and facilitate airflow in the horizontal and radial direction into or out of the volume of the central space 98. Additionally, movement of successively coupled belt modules 130 while the conveyor belt 82 is travelling up the conveyor stack 88 may cause play between adjacent side plates **142, 144** (and particular between adjacent outer side plates 144, as a circumference of the outer side wall 105 of the conveyor stack 88 formed by adjacent outer side plates 144 is generally larger than the circumference of the inner side wall 104 of the conveyor stack 88 formed by adjacent inner side plates 142) causing spaces to open between the adjacent side plates **142, 144** which enables airflow through such spaces.

Horizontal airflow across the central portions 132 of the belt modules 130 (ie. airflow from the outer side wall 105 to the inner side wall 104 of the conveyor belt 82, and vice versa) may further be facilitated by the configuration of the central portion 132. In certain embodiments, the central portion 132 may be configured to substantially restrict airflow vertically through the central portion 132, such as restrict the airflow vertically from an upper side 150 of the belt module 130 to a lower side 152 of the belt module 130, thus substantially restricting airflow in a vertical direction between different tiers of the plurality of tiers 86 of the conveyor stack 88. For example, the central portion 132 may be made of a solid material, or have a solid configuration, which is substantially air impermeable, such that the airflow 200 contacting the central portion 132 is substantially deflected by the central portion 132. In other embodiments, the central portion 132 may not restrict airflow in the vertical direction through the central portion 132 and may allow some airflow from the upper side 150 to the lower side 152 of the belt module 130. In such embodiments, the central portion 132 may be made of a material or have configuration which is substantially air permeable, and may be made of a mesh material or other perforated material for example.

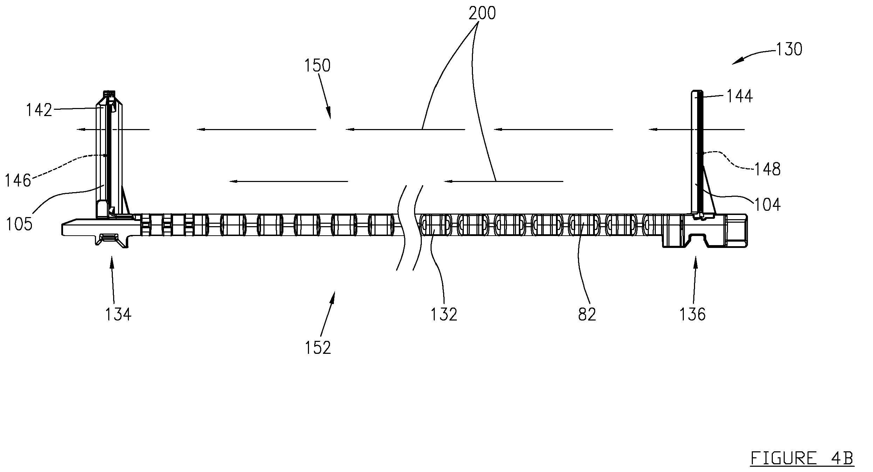

Referring back to Figure 1, the conveyor stack 88 of the conveyor belt 82 is located entirely within the chamber 54. Referring briefly to Figures 4A and 4B, the conveyor stack 88 may be located substantially centrally in the chamber 54 relative to the generating means 180 (described in greater detail below), such that a closest distance 170 between the first end wall 58 of the housing 52 and the outer side wall 105 of the conveyor belt 82 in the conveyor stack 88 is substantially equal to a closest distance 172 between an airflow outlet of the generating means 180 and the outer side wall 105 of the conveyor belt 82 in the conveyor stack 88. Further, the conveyor stack 88 may be located in the chamber 54 such that a closest distance 174 between the first side wall 62 of the housing 52 and the outer wall 105 of the conveyor belt 82 in the conveyor stack 88 is substantially equal to a closest distance 176 between the second side wall 64 and the outer wall 105 of the conveyor belt 82 in the conveyor stack 88. In yet other embodiments (not shown), the closest distances **170, 172, 174** and **176** may all be substantially equal. The central location of the conveyor stack 88 in the chamber 54 may facilitate directing the airflow substantially evenly in the horizontal and radial direction into and out of the conveyor stack 88 and the volume of the central space 98.

Still referring to Figure 1, the chamber 54 is divided into a first sub-chamber 160 and a second sub-chamber 162. The first and second sub-chambers **160** and **162** are defined and separated by a baffle 202.

The plurality of tiers 86 of the conveyor stack 88 includes a first plurality of tiers 94 (comprising lower tiers proximate the lower input 84 (shown in Figure 2)) and a second plurality of tiers 96 (comprising the upper tiers proximate the upper output 90 (shown in Figure 2)). The first plurality of tiers 94 of the conveyor stack **88 is** located substantially entirely within the first sub-chamber 160, and the second plurality of tiers 96 of the conveyor stack 88 is located substantially entirely within the second sub-chamber 162. In embodiments where the travel path of the conveyor belt 82 moves from the lower input 84, through the conveyor stack 88 and then to the upper output 90, product carried by the conveyor belt 82 is moved from the first plurality of tiers 94 into the second plurality of tiers 96 and is thus moved from the first sub-chamber 160 to the second sub-chamber 162 as the conveyor belt 82 moves through the travel path of the conveyor belt 82. In embodiments where the travel path of the conveyor belt 82 is reversed and moves from the upper output 90, through the conveyor stack 88, and then to the lower input 84, product carried by the conveyor belt 82 is moved from the second plurality of tiers 96 to the first plurality of tiers 94, and is thus moved from the second sub-chamber 162 to the first sub-chamber 160 as the conveyor belt 82 moves through the travel path of the conveyor belt 82.

Similarly, the volume of the central space 98 of the conveyor stack 88 includes a first portion 204 (generally corresponding to a lower portion of the volume) and a second portion 206 (generally corresponding to an upper portion of the volume). The first portion 204 of the volume of the central space 98 is located entirely within the first sub-chamber 160 and the second portion 206 of the volume of the central space 98 is located entirely within the second sub-chamber 162.

Still referring to Figure 1, the heat transfer system 50 further includes the generating means 180. In the embodiment shown, the generating means 180 includes an airflow producing means 182 configured to produce and direct the airflow 200, which may be cooled or heated airflow, towards the second plurality of tiers 96 of the conveyor stack 88 in the second sub-chamber 162. The airflow producing means 182 may be any means designed to produce the airflow 200 from at least one air outlet of the airflow producing means 182 and direct the airflow 200 towards the conveyor stack 88 in a substantially horizontal direction. For example, the airflow producing means 182 may be a fan, blower, compressor or any other suitable means for producing the airflow **200** in the substantially horizontal direction. The airflow producing means **182** may be entirely located in the second sub-chamber **162.**

The generating means **180** further includes an airflow drawing means **184** configured to draw the airflow **200** away from the first plurality of tiers **94** of the conveyor stack **88** in the first sub-chamber **160.** The airflow drawing means **184** may be any means configured to draw the airflow **200** away from the conveyor stack **88** and to direct the airflow **200** towards at least one air inlet of the airflow drawing means **184** in a substantially horizontal direction. For example, the airflow drawing means **184** may be a vacuum or other suction means, or any other suitable means for drawing the airflow **200** in the substantially horizontal direction. The airflow drawing means **184** may be located entirely within the first sub-chamber **160.**

As noted above, in the embodiment shown in Figure **1****,** the airflow producing means **182** is configured to produce and direct the airflow **200** towards the conveyor stack **88** in the second sub-chamber **160,** whereas the airflow drawing means **184** is configured to draw the airflow **200** away from the conveyor stack **88** in the first sub-chamber **160.** However, in other examples not part of the invention (not shown), this configuration may be reversed. For example, in other examples, the airflow producing means **182** may be configured to produce and direct the airflow **200** towards the conveyor stack **88** in the first sub-chamber **160,** whereas the airflow drawing means **184** may be configured to draw the airflow **200** away from the conveyor stack **88** in the second sub chamber **162.** In such examples, the location of the airflow producing means **182** and the airflow drawing means **184** may also be reversed. For example, the air flow producing means **182** may be entirely located in the first sub-chamber **160,** whereas the airflow drawing means **184** may be located entirely within the second sub-chamber **162.**

In the embodiment shown in Figure **1****,** the baffle **202** may be substantially continuous around the plurality of tiers **86** of the conveyor stack **88** and the generating means 180, extending generally throughout the chamber **54** from the first end wall **58** to the second end wall **60** of the housing **52.**

As noted above, the baffle **202** divides the chamber **54** into the first sub-chamber **160** and the second sub-chamber **162,** and is configured to substantially restrict the airflow **200** in a vertical direction directly between the first sub-chamber **160** and the second sub-chamber **162.** The baffle **202** also divides the second plurality of tiers **96** of the conveyor stack **88** from the first plurality of tiers **94** of the conveyor stack **88,** and is configured to substantially restrict airflow directly between an interface of the second plurality of tiers **96** and the first plurality of tiers **94.** For example, the baffle **202** substantially restricts the airflow **200** in a vertical direction through the conveyor stack **88,** between the inner side wall **104** and the outer side wall **105** of the conveyor belt **82,** at the interface between the first plurality of tiers **94** and the second plurality of tiers **96.** To accomplish the restriction of the airflow **200** in the vertical direction described above, the baffle **202** may primarily be made of a material, or may primarily have a configuration, which is substantially air impermeable such that the airflow **200** contacting the baffle **202** is substantially deflected by the baffle **202.** However, portions of the baffle **202** may be made of a material, or have a configuration, which is air permeable. For example, proximate the conveyor stack **88,** the baffle **202** may have at least one opening which allows the conveyor belt **82** to move between the first plurality of tiers **94** located in the first sub-chamber **160** and the second plurality of tiers **96** located in the second sub-chamber **162.** Further, proximate the generator means **180,** the baffle **202** may have an opening configured to receive the generator means **180,** or a portion which allows the airflow producing means **182** to generate the airflow **200** from the at least one air outlet into the second sub-chamber **162** or a portion which allows the airflow drawing means **184** to draw the airflow **200** from the first sub-chamber **160** into the at least one air inlet. In certain embodiments (not shown), the baffle **202** may comprise a mezzanine deck which is capable of supporting at least one individual, such as an operator for example.

The baffle **202** may be configured to stop at the inner side wall **104** of the conveyor belt **82** forming the conveyor stack **88** and may not extend within the volume of the central space **98** of the conveyor stack **88.** The baffle **202** thus does not restrict the airflow **200** in a vertical direction between the second portion **206** of the volume of the central space **98** in the first sub-chamber **160** and the first portion **204** of the volume of the central space **98** in the second sub-chamber **162.** The baffle **202** thus substantially restricts the airflow **200** in a vertical direction directly between the second sub-chamber **162** and the first sub-chamber **160** except within the volume of the central space **98.**

Further, as noted above, in certain embodiments, the conveyor belt **82** may be configured (such as due to the material or configuration of the central portion **132** of the belt modules **130** (shown in Figure **3****)** forming the conveyor belt **82** being substantially air impermeable for example) to restrict airflow vertically through the conveyor stack **88** between the tiers of the first plurality of tiers **94** and between the tiers of the second plurality of tiers **96.** In such embodiments, the material or configuration of the central portion **132** of the belt module **130** substantially restrict the airflow **200** in a vertical direction through the conveyor stack **88** even within the second sub-chamber **162** and through the conveyor stack **88** even within the first sub-chamber **160,** rather than merely between the first and second sub-chambers 160 and 162. Further, in such embodiments, the baffle **202** may cooperate with the material or configuration of the central portion **132** of the belt module **130** to substantially restrict the airflow **200** in the vertical direction throughout the entire conveyor stack **88.**

In other embodiments, the conveyor belt **82** may be configured (such as due to the material or configuration of the central portion **132** of the belt modules **130** (shown in Figure **3****)** forming the conveyor belt **82** being substantially air permeable for example) to allow the airflow **200** in the vertical direction through the conveyor stack **88** between the tiers of the first plurality of tiers **94** and between the tiers of the second plurality of tiers **96.** In such embodiments, the material or configuration of the central portion **132** of the belt module **130** may allow the airflow **200** in a vertical direction through the conveyor stack **88** within the second sub-chamber **162** and through the conveyor stack **88** the first sub-chamber **160,** but the baffle **202** may restrict the airflow **200** in the vertical direction through the conveyor stack 88 between the second sub-chamber **162** and the first sub-chamber **160.**

Referring now to Figures **1****,** **4**A, **4**B, 5A and 5B, different features and elements of the heat transfer system **50** may facilitate directing the airflow **200** in a horizontal and radial direction across the conveyor stack **88** and in a horizontal and radial direction to enter and exit the volume of the central space **98.** As will be described in greater detail below, the baffle 202, the airflow producing means 182 in the second sub-chamber 162, the airflow drawing means 184 in the first sub-chamber 160 and optionally at least one of: the configuration of the belt module **130** (shown in Figure **3****),** the top end wall **106** positioned at the top opening **100** of the conveyor stack **88,** the bottom end wall **108** positioned at the bottom opening **102** of the conveyor stack **88**, and the central placement of the conveyor stack **88** within the chamber **54,** may cooperate to:
**(1)** direct the airflow **200,** produced from the airflow producing means **182** and in the second sub-chamber **162,** in a horizontal direction towards the conveyor stack **88** and in a horizontal and radial direction into the conveyor stack **88,**
**(2)** direct the airflow **200,** in the conveyor stack **88** in second sub-chamber **162,** in a horizontal and radial direction across the second plurality of tiers **96** of the conveyor stack **88** to enter the second portion **206** of the volume of the central space **98,**
**(3)** direct the airflow **200** in a vertical direction from the second portion **206** of the volume of the central space **98** (in the second sub-chamber **162)** towards the first portion **204** of the volume of the central space **98** (in the first sub-chamber **160),**
**(4)** direct the airflow **200,** in the first portion **204** of the volume of the central space **98** and in the first sub-chamber **160,** in a horizontal and radial direction to exit the first portion **204** of the volume of the central space **98,**
**(5)** direct the airflow **200,** in the conveyor stack **88** in the first sub-chamber **160,** in a horizontal and radial direction across the first plurality of tiers **94** of the conveyor stack **88** and to exit the conveyor stack **88** in a horizontal direction towards the airflow drawing means **184.**

Referring to Figures 4A and **4**B, a cross-sectional view of the heat transfer system **50** of Figure **1** at line **4-4** is shown in Figure **4A****,** and path of travel of the airflow **200** across a belt module **130** (described in greater detail above in association with Figure **3****)** of the conveyor belt **82** located in the second sub-chamber **162** (such as located within a tier of the second plurality of tiers **96** of the conveyor stack **88)** is shown in Figure **4B****.**

Referring to Figures 1 and **4A****,** within the second sub-chamber **162,** the airflow **200** is initially produced by the airflow producing means **182** and is directed by the airflow producing means **182** from the at least one air outlet of the airflow producing means **182** in a horizontal direction towards the conveyor stack **88.** Directing the airflow **200** in the horizontal direction towards the conveyor stack **88** is primarily due to the production of the airflow **200** in the horizontal direction by the airflow producing means **182.** However, directing the airflow **200** in the horizontal direction towards the conveyor stack **88** is facilitated by at least features (1) and (5) of the heat transfer system 50, as described below and may further be facilitated by at least one of the features and elements (2) to (4) of the heat transfer system **50:**
**(1)** Placement of the airflow producing means **182** in the second sub-chamber **162** (which generates a positive air pressure in the second sub-chamber **162)** in combination with placement of the airflow drawing means **184** in the first sub-chamber **160** (which generates a negative air pressure in the first sub-chamber **160),** which can create a pressure differential between the second sub-chamber **162** and the first sub-chamber **160.** The pressure differential may cause the airflow **200** to seek a path of travel from the second sub-chamber **162** to the first sub-chamber **160.**
**(2)** Certain portions of the airflow **200** generated by the airflow producing means **182** may flow past the conveyor stack **88** to contact the first end wall **58** of the housing **52,** certain other portions of the airflow **200** may flow to contact the first side wall **62** and the second side wall **64** of the housing **52,** and certain other portions of the airflow **200** may flow to contact the top wall **55** of the housing **52.** However, as noted above, the airflow **200** contacting the walls **58, 62, 64** and **55** may be substantially deflected back towards the conveyor stack **88.**
**(3)** Central placement of the conveyor stack **88** within the chamber **54** may cause even deflection of the airflow **200** back towards the conveyor stack **88.** In particular, the closest distance **174** between the first side wall **62** and the conveyor stack **88** is substantially equal to the closest distance **176** between the second side wall **64** and the conveyor stack **88.** As such, the volume and rate of deflection of the airflow **200** contacting the first side wall **62** and the second sidewall **64** back towards the conveyor stack **88** maybe substantially equal, which may facilitate even deflection of the airflow **200** in the horizontal direction towards the conveyor stack **88.**
**(4)** The top end wall **106** positioned at the top opening **100** of the conveyor stack **88** and configured to substantially restrict the airflow **200** in a vertical direction through the top opening **100.** The top end wall **106** may cause certain portions of the airflow **200** in the second sub-chamber **162** which flow to contact the top end wall **106** to be deflected back into the second sub-chamber **162** such as towards the top wall **55** of the housing **52** for example. The top end wall **106** may also restrict the airflow **200** from entering the volume of the central space **98** directly from the second sub-chamber **162.** Deflecting the airflow **200** back into the second sub-chamber **162** and preventing the airflow **200** from entering the volume of the central space **98** directly from the second sub-chamber **162** can facilitate directing the airflow **200** in the horizontal direction towards the conveyor stack **88,** as the airflow **200** seeks alternate paths of travel from the second sub-chamber **162** towards the first sub-chamber **160.**
**(5)** The baffle **202** configured to substantially restrict the airflow **200** directly between the second sub-chamber **162** and the first sub-chamber **160.** Certain portions of the airflow **200** in the second sub-chamber **162** which flow to contact the baffle **202** may be deflected back into the second sub-chamber **162,** such as towards the top wall **55** of the housing **52** for example. Deflecting the airflow **200** back into the second sub-chamber **162** and preventing the airflow **200** from entering the first sub-chamber 160 directly from the second sub-chamber **162** except within the volume of the central space 98, facilitates directing the airflow **200** in the horizontal direction towards the conveyor stack **88,** as the airflow **200** seeks alternate paths of travel from the second sub-chamber **162** towards the first sub-chamber **160.**

Referring to Figures **1****,** **4A** and **4B****,** at least a portion of the airflow **200** produced by the airflow producing means **182** and within the second sub-chamber **162** is then directed in a horizontal and radial direction to enter the conveyor stack **88** through the outer side wall **105** of the conveyor belt **82.** Directing the airflow **200** in the horizontal and radial direction to enter the conveyor stack **88** is primarily due to the following features and elements of the heat transfer system **50:**
**(A)** Production of the airflow **200** in the horizontal direction in the second sub-chamber **162** towards the conveyor stack **88** by the airflow producing means **182.**
**(B)** The air permeable configuration of the outer side wall **105** of the conveyor belt **82,** such as due to the at least one aperture **148** in the outer side plate **144** (generally forming the outer side wall **105)** of belt modules 130 forming the conveyor belt **82,** or alternative configurations or materials which provide the outer side wall **105** with air permeability. The air permeable outer side wall **105** enables the airflow **200** in the second sub-chamber **162** outside the conveyor stack **88** to flow through the outer side wall **105** to enter the conveyor stack **88.**

However, directing the airflow **200** within the second sub-chamber **162** in the horizontal and radial direction to enter the conveyor stack 88 is facilitated by at least features (1) and (3) of the heat transfer system 50, as described below, and may further be facilitated by feature or element (2) of the heat transfer system, as described below:
**(1)** Placement of the airflow producing means **182** in the second sub-chamber **162** and the placement of the airflow drawing means **184** in the first sub-chamber **160** to create the pressure differential between the second sub-chamber **162** and the first sub-chamber **160.** As noted above, the pressure differential may cause the airflow **200** to seek a path of travel from the second sub-chamber **162** to the first sub-chamber **160.**
**(2)** As noted above, the top end wall **106** substantially restricting the airflow **200** in a vertical direction from the second sub-chamber **162** through the top opening **100** and directly into the volume of the central space **98** can facilitate directing the airflow **200** in the horizontal and radial direction to enter the conveyor stack **88** through the outer side wall **105,** as the airflow **200** seeks alternate paths of travel from the second sub-chamber **162** towards the first sub-chamber **160.**
**(3)** As noted above, the baffle **202** substantially restricting the airflow **200** from flowing directly between the second sub-chamber **162** and the first sub-chamber **160** except within the volume of the central space 98, facilitates directing the airflow **200** in the horizontal and radial direction to enter the conveyor stack **88** through the outer side wall **105,** as the airflow **200** seeks alternate paths of travel from the second sub-chamber **162** towards the first sub-chamber **160.**

Still referring to Figures **1****,** **4A** and **4B****,** at least a portion of the airflow **200** within the conveyor stack **88** is then directed in a horizontal and radial direction across the second plurality of tiers **96** of the conveyor stack **88** and through the inner side wall **104** of the conveyor belt **82** to enter the second portion **206** of the volume of the central space **98.** Directing the airflow **200** within the conveyor stack **88** in the horizontal and radial direction across the second plurality of tiers **96** and to enter the second portion **206** of the volume of the central space **98** is primarily due to the following features and elements of the heat transfer system **50:**
**(A)** As noted above, production of the airflow **200** in the horizontal direction in the second sub-chamber **162** towards the conveyor stack **88** by the airflow producing means **182.**
**(B)** The air permeable configuration of the inner side wall **104** of the conveyor belt **82,** such as due to the at least one aperture **146 in** the inner side plate **142** (generally forming the inner side wall **104)** of the belt modules **130** forming the conveyor belt **82,** or alternative configurations or materials which provide the inner side wall **104** with air permeability. The air permeable inner side wall **104** enable the airflow **200** received within the conveyor stack **88** to flow through the inner side wall **105** to enter the second portion **206** of the volume of central space **98.**

However, directing the airflow **200** within the conveyor stack **88** in the horizontal and radial direction across the second plurality of tiers **96** and into the second portion **206** of the volume of the central space **98** is facilitated by at least features (1) and (4) of the heat transfer system 50, as described below and may further be facilitated by at least one of the following features and elements (2) and (3) of the heat transfer system **50:**
**(1)** As noted above, placement of the airflow producing means **182** in the second sub-chamber **162** and the placement of the airflow drawing means **184** in the first sub-chamber **160** to create the pressure differential between the second sub-chamber **162** and the first sub-chamber **160.** As noted above, the pressure differential may cause the airflow **200** to seek a path of travel from the second sub-chamber **162** to the first sub-chamber **160.**
**(2)** In certain embodiments, the conveying portion **107** of the conveyor belt **82** between the inner side wall **104** and the outer side wall **105** of the conveyor belt **82** may restrict airflow **200** in a vertical direction through the conveying portion **107,** such as due to the configuration or materials of the central portion **132** of the belt module **130** forming the conveyor belt **82.** Restricting the airflow **200** in the vertical direction through the conveying portion **107** can restrict the airflow **200** in the vertical direction between the different tiers of the second plurality of tiers **96** of the conveyor stack **88** in the second sub-chamber **162.** Restricting the airflow **200** in the vertical direction through the conveyor stack **88** can facilitate directing the airflow **200** in the horizontal and radial direction across the second plurality of tiers **96** of the conveyor stack **88** and into the second portion **206** of the volume of the central space **98,** as the airflow **200** seeks alternate paths of travel from the second sub-chamber **162** towards the first sub-chamber **160.**
**(3)** As noted above, the top end wall **106** substantially restricting the airflow **200** in a vertical direction from the second sub-chamber **162** through the top opening **100** and directly into the volume of the central space **98** can facilitate directing the airflow **200** in the horizontal and radial direction across the second plurality of tiers **96** and into the second portion **206** of the volume of the central space **98,** as the airflow **200** seeks alternate paths of travel from the second sub-chamber **162** towards the first sub-chamber **160.**
**(4)** As noted above, the baffle **202** substantially restricting the airflow **200** from flowing directly between the second sub-chamber **162** and the first sub-chamber **160** except within the volume of the central space 98, can facilitate directing the airflow **200** in the horizontal and radial direction across the second plurality of tiers **96** and into the second portion **206** of the volume of the central space **98,** as the airflow **200** seeks alternate paths of travel from the second sub-chamber **162** towards the first sub-chamber **160.**

Referring now to Figure 1, at least a portion of the airflow **200** within the second portion **206** of the volume of the central space **98** is then directed in a vertical direction from the second portion **206** of the volume of the central space **98** towards the first portion **204** of the volume of the central space **98.** The airflow **200** is thus allowed to vertically flow from the second sub-chamber **162** into the first sub-chamber **160** within the volume of the central space **98.** Directing the airflow **200** in the vertical direction from the second portion **206** to the first portion **204** of the volume of the central space **98** is primarily due to the following features and elements of the heat transfer system **50:**
**(A)** Placement of the airflow producing means **182** in the second sub-chamber **162** and the placement of the airflow drawing means **184** in the first sub-chamber **160** to create the pressure differential between the second sub-chamber **162** and the first sub-chamber **160.** As noted above, the pressure differential may cause the airflow **200** to seek a path of travel from the second sub-chamber **162** to the first sub-chamber **160.**
**(B)** The baffle **202** substantially restricting the airflow **200** from flowing in the vertical direction directly between the second sub-chamber **162** and the first sub-chamber **160** except within the volume of the central space **98.** Restricting the airflow **200** between the second sub-chamber **162** and first sub-chambers **160** except within the volume of central space **98** generally facilitates the airflow **200** in the vertical direction within the volume of the central space **98** (such as from the second portion **206** of the volume of the central space **98** located in the second sub-chamber **162** to the first portion **204** of the volume of the central space **98** located in the first sub-chamber **160),** as the airflow **200** seeks a path of travel from the second sub-chamber **162** towards the first sub-chamber **160.**

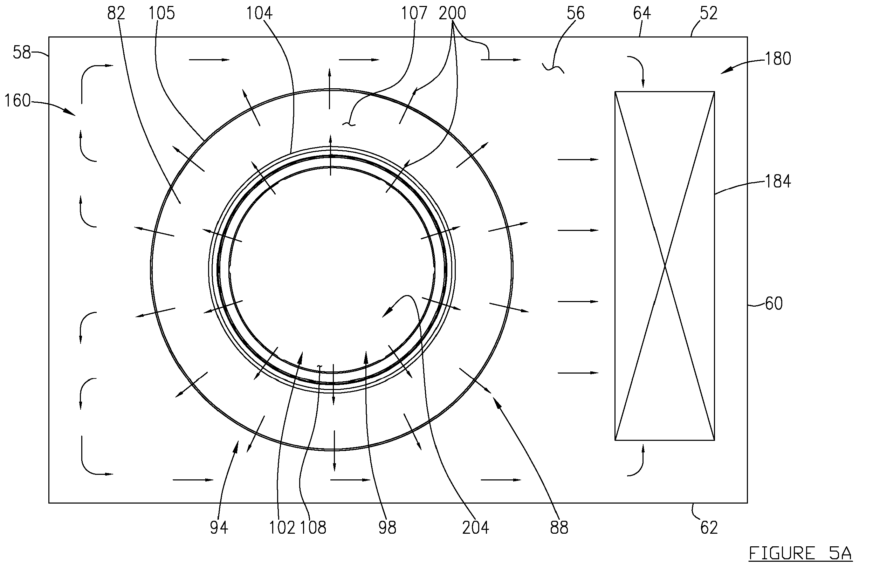

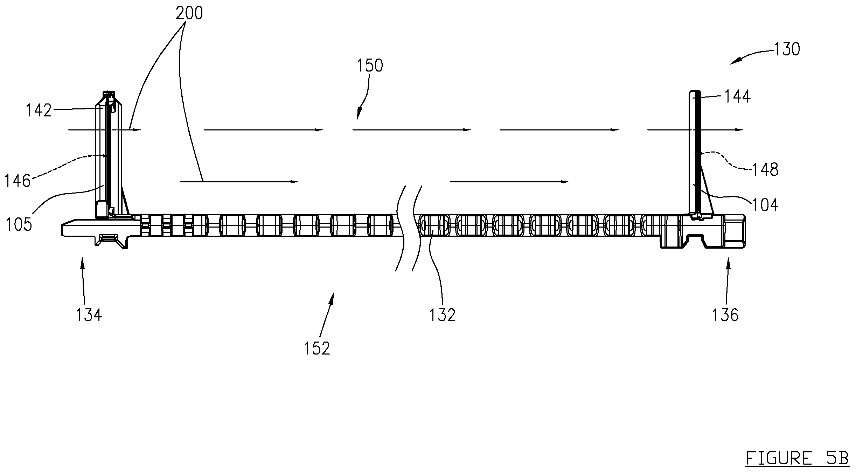

Referring to Figures **5A** and **5B****,** a cross-sectional view of the heat transfer system **50** of Figure **1** at line **5-5** is shown in Figure **5A****,** and the path of travel of the airflow **200** across a belt module **130** (described in greater detail above in association with Figure **3****)** located in the first sub-chamber **160** (such as located within a tier of the first plurality of tiers **94** of the conveyor stack **88)** is shown in Figure **5B****.**

Referring to Figures **1****,** **5A** and **5B****,** at least a portion of the airflow **200** within the first portion **204** of the volume of the central space **98** is directed in a horizontal and radial direction through the inner side wall **104** of the conveyor belt **82** to exit the volume of the central space **98.** Directing the airflow **200** within the first portion **204** of the volume of the central space **98** in the horizontal and radial direction to exit the volume of the central space **98** is primarily due to the following features and elements of the heat transfer system **50:**
**(A)** Drawing of the airflow **200** in the horizontal direction in the first sub-chamber **160** away from the conveyor stack **88** by the airflow drawing means **184,** which encourages the airflow **200** within the first portion **204** of the volume of the central space **98** to find a path of travel towards the at least one air inlet of the airflow drawing means **184.**
**(B)** The air permeable configuration of the inner side wall **104** of the conveyor belt **82,** which enables the airflow **200** within the first portion **204** of the volume of the central space **98** to flow through the inner side wall **104** to exit the volume of the central space **98.**

However, in certain embodiments, directing the airflow **200** within the first portion **204** of the volume of the central space **98** in the horizontal and radial direction to exit the volume of the central space **98** may also be facilitated by at least the following feature of the heat transfer system **50:**
**(1)** The bottom end wall **108** positioned at the bottom opening **102** of the conveyor stack **88.** The bottom end wall **108** may cause certain portions of the airflow **200** within the volume of the central space **98** which flow to contact the bottom end wall **108** to be deflected back into the volume of the central space **98.** The bottom end wall **108** also restrict the airflow **200** within the volume of the central space **98** from flowing in a vertical direction directly from the volume of the central space **98** into the first sub-chamber **160.** Deflecting the airflow **200** back into the volume of the central space **98** and preventing the airflow **200** from entering the first sub-chamber **104** directly from the volume of the central space **98** can facilitate directing the airflow **200** in the horizontal and radial direction to exit the first portion **204** of the volume of the central space **98,** as the airflow **200** seeks to find alternate paths of travel towards the at least one air inlet of the airflow drawing means **184.**

Still referring to Figures **1****,** **5A** and **5B****,** at least a portion of the airflow **200** within the conveyor stack **88** is then directed in a horizontal and radial direction across the first plurality of tiers **94** of the conveyor stack **88** and through the outer side wall **105** of the conveyor belt **82** to exit the conveyor stack **88.** Directing the airflow **200** in the horizontal and radial direction across the first plurality of tiers **94** and to exit the conveyor stack **88** is primarily due to:
**(A)** Drawing of the airflow **200** in the horizontal direction in the first sub-chamber **160** away the conveyor **stack 88** by the airflow drawing means **184,** which encourages the airflow **200** in the conveyor stack **88** to find a path of travel towards the at least one air inlet of the airflow drawing means **184.**
**(B)** The air permeable configuration of the outer side wall **105** of the conveyor belt **82,** which enables the airflow **200** within the conveyor stack **88** in the first sub-chamber **162** to flow through the outer side wall **105** to exit the conveyor stack **88.**

However, in certain embodiments, directing the airflow **200** within the conveyor stack **88** in the horizontal and radial direction across the first plurality of tiers **94** and through the outer side wall **105** to exit the conveyor stack **88** may also be facilitated by at least one of the following features or elements of the heat transfer system **50:**
**(1)** As noted above, the conveying portion **107** of the conveyor belt **82** between the inner side wall **104** and the outer side wall **105** of the conveyor belt **82** may restrict airflow **200** in the vertical direction through the conveying portion **107.** Restricting the airflow **200** in the vertical direction through the conveying portion **107** can restrict the airflow **200** in the vertical direction between the different tiers of the first plurality of tiers **94** of the conveyor stack **88** in the first sub-chamber **162.** Restricting the airflow **200** in the vertical direction between different tiers of the first plurality of tiers **94** can facilitate directing the airflow **200** in the horizontal and radial direction across the first plurality of tiers **94** and through the outer side wall **105** to exit the conveyor stack **88,** as the airflow **200** seeks alternate paths of travel towards the at least one air inlet of the airflow drawing means **184.**
**(2)** As noted above, the bottom end wall **108** substantially restricting the airflow **200** in a vertical direction from the volume of the central space **98** directly into the first sub-chamber **160** can facilitate directing the airflow **200** within the conveyor stack **88** in the horizontal and radial direction across the first plurality of tiers **94** and through the outer side wall **105** to exit the conveyor stack **88,** as the airflow **200** seeks alternate paths of travel towards the at least one air inlet of the airflow drawing means **184.**

Referring now to Figures **1** and **5A****,** within the first sub-chamber **160,** at least a portion of the airflow **200** exiting the conveyor stack **88** is drawn by the airflow drawing means **184** horizontally from the conveyor stack **88** towards the at least one air inlet of the airflow drawing means **184.** Drawing the airflow **200** in the horizontal direction away from the conveyor stack **88** may primarily be due to a vacuum or other negative pressure created by the airflow drawing means **184** in the first sub-chamber **160,** which encourages the airflow **200** within the first sub-chamber **160** to find a path of travel towards the at least one air inlet of the airflow drawing means **184.** However, directing the airflow **200** in the horizontal direction away from the conveyor stack **88** is facilitated by at least feature (4) of the heat transfer system 50, as described below and may further be facilitated by at least one of the following features and elements (1) to (3) of the heat transfer system **50:**
**(1)** Certain portions of the airflow **200** exiting the conveyor stack **88** may flow to contact the first end wall **58** of the housing **52,** certain other portions of the airflow **200** may contact the first side wall **62** and the second side wall **64** of the housing **52,** and certain other portions of the airflow **200** may contact the bottom wall **56** of the housing **52.** However, the walls **58, 62, 64,** and **56** may deflect the airflow **200** contacting the walls **58, 62, 64** and **56** back into the first sub-chamber **160,** which may facilitate the drawing of the airflow **200** in the first sub-chamber **160** away from the conveyor stack **88** and towards the at least one air inlet of the airflow drawing means **184.**
**(2)** As noted above, the central placement of the conveyor stack **88** within the chamber **54** may cause even deflection of the airflow **200** which contacts the walls **58, 62, 64** and **56** back into the first sub-chamber **160,** which may facilitate the even deflection of the airflow **200** back into the first sub-chamber **160.** The airflow **200** remaining in the first sub-chamber **160** may be drawn in the horizontal direction towards the at least one air inlet of the airflow drawing means **184.**
**(3)** The bottom end wall **108** may further deflect certain portions of the airflow **200** in the first sub-chamber **160** which flow to contact the bottom end wall **108** back into the first sub-chamber **160,** such as towards the bottom wall **56** of the housing **52** for example. The bottom end wall **108** can thus also prevent the airflow **200** in the first sub-chamber **162** from flowing back into the volume of the central space **98.** Deflecting the airflow **200** back into the first sub-chamber **160** and preventing the airflow **200** from entering the volume of the central space **98** can cause the airflow **200** to remain within the first sub-chamber **160.** The airflow **200** remaining in the first sub-chamber **160** may be drawn in the horizontal direction towards the at least one air inlet of the airflow drawing means **184.**
**(4)** The baffle **202** of the heat transfer system **50** is configured to substantially restrict the airflow **200** directly between the first sub-chamber **160** and the second sub-chamber **162** except within the volume of the central space 98. Certain portions of the airflow **200** in the first sub-chamber **160** which flow to contact the baffle **202** may be deflected from the baffle **202** back into the first sub-chamber **160,** such as towards the bottom wall **56** of the housing **52** for example. Deflecting the airflow **200** back into the first sub-chamber **160** and preventing the airflow **200** from entering the second sub-chamber **162** directly from the first sub-chamber **160** can cause the airflow **200** to remain within the first sub-chamber **160.** The airflow **200** remaining in the first sub-chamber **160** may be drawn in the horizontal direction towards the at least one air inlet of the airflow drawing means **184.**

As noted above, in some embodiments, the conveyor system **80** may include a driving drum located within the central space **98** of the conveyor stack **88** which engages the inner wall **104** the conveyor belt **82** to rotate the conveyor belt **82** along a travel path of the conveyor belt **82.** One embodiment of such a driving drum is shown generally at **250** in Figure **6****.**

The driving drum **250** may include a plurality of drive bars **252** to facilitate engagement of the inner wall **104** of the conveyor belt **82.** For example, each drive bar of the plurality of drive bars **252** may engage a contact surface (resulting from a recess or a lug) on the inner wall of the conveyor belt **82,** and each drive bar of the plurality of drive bars **252** may engage multiple different tiers of the plurality of tiers **86** of the conveyor stack **88** along the drive bar's vertical length **254.** Rotation of the driving drum **250** may drive the conveyor belt **82** along the travel path of the conveyor belt **82** and through the conveyor stack **88.** For example, in embodiments where the travel path of the conveyor belt **82** involves traveling from the lower input **84,** into the conveyor stack **88,** and exiting at the upper output **90,** rotation of the driving drum **250** may drive the conveyor belt **82** upwards through the conveyor stack **88** from the first plurality of tiers **94** (generally comprising the lower tiers) towards the second plurality of tiers **96** (generally comprising the upper tiers). In other embodiments where the travel path of the conveyor belt **82** is in the reverse direction, namely traveling from the upper output **90,** into the conveyor stack **88,** and exiting at the lower input **84,** the rotation of the driving drum **250** may drive the conveyor belt **82** downwards through the conveyor stack **88** from the second plurality of tiers **96** to the first plurality of tiers **94.**

The driving drum **250** may further include a plurality of spaces **256** between and separating different drive bars of the plurality of drive bars **252.** The plurality of spaces **256** and the plurality of drive bars **252** generally form a lateral wall **258** of the driving drum **250.** The plurality of spaces **256** provide the lateral wall **258** of the driving drum **250** with a substantially air permeable configuration. In other embodiments, the driving drum **250** may have other features, or may be formed of other materials, which provide the lateral wall **258** with a substantially air permeable configuration. For example, rather than the plurality of spaces **256,** the plurality of drive bars **252** may be separated by a mesh or a material having a plurality of apertures.

The air permeable lateral wall **258** of the driving drum **250** cooperates with the air permeable inner side wall **104** and the air permeable outer side wall **105** of the conveyor belt **82** to enable the airflow **200** to in the horizontal and radial direction from outside of the conveyor stack **88** into the second portion **206** of the volume of the central space **98** in the second sub-chamber **162** (shown in Figures **1** and **4A****),** and in the horizontal and radial direction from the first portion **204** of the volume of the central space **98** through the conveyor stack **88** to the outside of the conveyor stack **88** in the first sub-chamber **160** (shown in Figures **1** and **5A****).** For example, in the second sub-chamber **162,** at least a portion of the airflow **200** within the conveyor stack **88** may be directed to enter the second portion **206** of the volume of the central space **98** through both the inner side wall **104** of the conveyor belt **82** and the lateral wall **258** of the driving drum **250.** Similarly, in the first sub-chamber **160,** at least a portion of the airflow **200** within the first portion **204** of the central space **98** may be directed to exit the first portion **204** of the central space **98** through both the lateral wall **258** of the driving drum **250** and the inner side wall **104** of the conveyor belt **82.**

The driving drum **250** may further include a top opening **260** and a bottom opening **262** which may generally align with the top opening **100** (shown in Figures **1** and **4A****)** and the bottom opening **102** (shown in Figures **1** and **5A****)** of the conveyor stack **88.** As such, in embodiments where the heat transfer system **50** includes at least one of the top end wall **106** positioned at the top opening **100** configured to substantially restrict any airflow through the top opening **100,** and the bottom end wall **106** positioned at the bottom opening **102** configured to substantially restrict any airflow through the bottom opening **102,** the top and bottom end walls **106, 108** may also substantially restrict any airflow through the top and bottom openings **260, 262** of the driving drum **250.** The top and bottom openings **260** and **262** of the driving drum **250** may thus generally cooperate with the top and bottom openings **100** and **102** and the top and bottom end walls **106** and **108** of the conveyor stack 88 to restrict the airflow **200** from vertically flowing directly from the second sub-chamber **162** into the volume of the central space **98** and from vertically flowing directly from the volume of the central space **98** into the first sub-chamber **160.**

Generally, the embodiments of the heat transfer system for altering a temperature of a product described herein include features which allow such heat transfer systems to generate and direct horizontal and radial airflow through a conveyor stack formed by a conveyor belt. For example, the conveyor belt having both an air permeable outer side wall and an air permeable inner side wall can allow horizontal airflow through the conveyor stack formed by the conveyor belt.

Further, embodiments of the heat transfer system which include a conveyor stack placed within a chamber having a first sub-chamber housing a first plurality of tiers of the conveyor stack and a second sub-chamber housing a second plurality of tiers of the conveyor stack can allow horizontal and radial airflow in two different directions, such as towards the conveyor stack in one of the first and second sub-chambers and away from the conveyor stack in one of the first and second sub-chambers. Horizontal and radial flow in two different directions may improve efficiency of the heat transfer system at altering the temperature of a product carried on the conveyor belt.

While the present subject matter has been described above in connection with illustrative embodiments, as shown in the various figures, it is to be understood that other similar embodiments may be used or modifications and additions may be made to the described embodiments for performing the same function without deviating therefrom. Further, all embodiments disclosed are not necessarily in the alternative, as various embodiments may be combined to provide the desired characteristics. While specific embodiments have been described and illustrated, such embodiments should be considered illustrative of the subject matter described herein.

## Claims

1. A heat transfer system **(50)** for altering a temperature of product with airflow **(200),** the system comprising:
a conveyor belt **(82)** for carrying the product, wherein the conveyor belt **(82)** has an air permeable outer side wall **(105)** and an air permeable inner side wall **(104)** and forms a conveyor stack **(88)** having a plurality of tiers **(86)** and a central space **(98)** with a volume, wherein the conveyor stack **(88)** is positioned in a chamber **(54)** such that a first portion **(204)** of the volume of the central space **(98)** and a first plurality of tiers **(94)** of the plurality of tiers **(86)** is located in a first sub-chamber **(160)** of the chamber **(54)** and a second portion **(206)** of the volume of the central space **(98)** and a second plurality of tiers **(96)** of the plurality of tiers **(86)** is located in a second sub-chamber **(162)** of the chamber **(54);**
a baffle **(202)** dividing the chamber **(54)** into the first sub-chamber **(160)** and the second sub-chamber **(162),** the baffle **(202)** coupled to the conveyor stack **(88)** and configured to substantially restrict the airflow **(200)** in a vertical direction directly between the first sub-chamber **(160)** and the second sub-chamber **(162)** except within the volume of the central space **(98)** between the second portion **(206)** of the volume of the central space **(98)** and the first portion **(204)** of the volume of the central space **(98);** and
generating means **(180)** for generating the airflow **(200)** in the chamber **(54),** wherein the generating means **(180)** comprises:
airflow producing means **(182)** located in the second sub-chamber **(162)** and configured to produce the airflow **(200)** and direct the airflow **(200)** in a horizontal direction towards the conveyor stack **(88),** such that the airflow **(200)** flows in a horizontal and radial direction across the second plurality of tiers **(96)** to enter the second portion **(206)** of the volume of the central space **(98);** and
airflow drawing means **(184)** located in the first sub-chamber **(160)** and configured to draw the airflow **(200)** in a horizontal direction away from the conveyor stack **(88),** such that the airflow **(200)** flows in a horizontal and radial direction to exit the first portion **(204)** of the volume of the central space **(98)** across the first plurality of tiers **(94).**

2. The system **(50)** of claim **1,** further comprising at least one of a top end wall **(106)** configured to restrict the airflow **(200)** in a vertical direction through a top opening **(100)** of the conveyor stack **(88)** and a bottom end wall **(108)** configured to restrict the airflow **(200)** in a vertical direction through a bottom opening **(102)** of the conveyor stack **(88).**

3. The system **(50)** of claim **2,** wherein the top end wall **(106)** further restricts the airflow **(200)** in a vertical direction from the second sub-chamber **(162)** directly into the volume of the central space **(98).**

4. The system **(50)** of claim **2** or **3,** wherein the bottom end wall **(108)** further restricts the airflow **(200)** in a vertical direction from the volume of the central space **(98)** directly into the first sub-chamber **(160).**

5. The system **(50)** of any one of claims **1-4,** wherein the conveyor belt **(82)** is formed from a plurality of belt modules, wherein each belt module **(130)** of the plurality of belt modules comprises:
a central portion **(132)** for carrying the product, wherein the central portion **(132)** extends between an inner side edge **(134)** of the belt module **(130)** and an outer side edge **(134)** of the belt module **(130);**
an inner side plate **(142)** coupled the central portion **(132)** proximate the inner side edge **(134);** and
an outer side plate **(144)** coupled the central portion **(132)** proximate the outer side edge **(136).**

6. The system **(50)** of claim **5,** wherein the outer side plate **(144)** and the inner side plate **(142)** each includes at least one aperture **(146)** to enable the airflow **(200)** in the horizontal and radial direction across the plurality of tiers **(86).**

7. The system **(50)** of claim **5** or **6,** wherein the outer side plate **(144)** of the plurality of belt modules form the air permeable outer side wall **(105)** of the conveyor belt **(82).**

8. The system **(50)** of any one of claims **5-7,** wherein the inner side plate **(142)** of the plurality of belt modules form the air permeable inner side wall **(104)** of the conveyor belt **(82).**

9. The system **(50)** of any one of claims **5-8,** wherein the central portion **(132)** has an air permeable configuration to facilitate the airflow **(200)** in a vertical direction through the central portion **(132)** between different tiers of the plurality of tiers **(86).**

10. The system **(50)** of any one of claims **5-8,** wherein the central portion **(132)** has an air impermeable configuration to substantially restrict the airflow **(200)** in a vertical direction through the central portion **(132)** between different tiers of the plurality of tiers **(86).**

11. The system **(50)** of any one of claims **5-10,** wherein the baffle **(202)** is further configured to substantially restrict the airflow **(200)** in a vertical direction at an interface between the second plurality of tiers **(96)** and the first plurality of tiers **(94).**

12. The system **(50)** of any one of claims **1-11** further comprising a driving drum **(250)** positioned within the central space **(98)** and configured to engage the inner side wall **(104)** of the conveyor belt **(82),** wherein the driving drum **(250)** comprises an air permeable side wall configured to cooperate with the air permeable inner side wall **(104)** and the air permeable outer side wall **(105)** of the conveyor belt **(82)** to facilitate the airflow **(200)** in the horizontal and radial direction across the plurality of tiers **(86).**

13. A method of altering a temperature of product carried on a conveyor belt (82) comprised in a heat transfer system (50), said conveyor belt having an air permeable outer side wall **(105)** and an air permeable inner side wall **(104)** and forming a conveyor stack **(88)** having a plurality of tiers **(86)** and a central space **(98)** with a volume, wherein the conveyor stack **(88)** is positioned in a chamber (54) of said heat transfer system, the method comprising:
producing, via airflow producing means (**182**) of airflow generating means (180) of said system (50) and located in a second sub-chamber **(162)** of the chamber **(54),** the airflow **(200)** in a horizontal direction towards the conveyor stack **(88),** such that the airflow **(200)** in the second sub-chamber **(162)** flows in a horizontal and radial direction across a second plurality of tiers **(96)** of the plurality of tiers **(86)** to enter a second portion **(206)** of the volume of the central space **(98);** and
drawing, via airflow drawing means **(184)** of said airflow generating means (180) and located in a first sub-chamber **(160)** of the chamber **(54),** the airflow **(200)** in a horizontal direction away from the conveyor stack **(88),** such that the airflow **(200)** in the first sub-chamber (160) flows in a horizontal and radial direction to exit a first portion **(204)** of the volume of the central space (98) across a first plurality of tiers **(94)** of the plurality of tiers **(86),**
wherein a baffle of said system (50) and coupled to the conveyor stack **(88)** is configured to divide the chamber **(54)** into the first sub-chamber **(160)** and the second sub-chamber **(162)** and to substantially restrict the airflow **(200)** in a vertical direction directly between the first sub-chamber **(160)** and the second sub-chamber **(162)** except within the volume of the central space **(98)** between the second portion **(206)** of the volume of the central space **(98)** and the first portion **(204)** of the volume of the central space **(98).**

14. The method of claim **13,** further comprising at least one of:
substantially restricting the airflow **(200)** in a vertical direction through a top opening **(100)** of the conveyor stack **(88)** in the second sub-chamber **(162)** to facilitate the airflow **(200)** in the horizontal and radial direction across the second plurality of tiers **(96)** to enter the second portion **(206)** of the volume of the central space **(98);** and
substantially restricting the airflow **(200)** in a vertical direction through a bottom opening **(102)** of the conveyor stack **(88)** in the first sub-chamber **(160)** to facilitate the airflow **(200)** in the horizontal and radial direction to exit the first portion **(204)** of the volume of the central space **(98)** across the first plurality of tiers **(94).**

15. The method of claim **14,** wherein:
substantially restricting the airflow **(200)** in the vertical direction through the top opening **(100)** of the conveyor stack **(88)** comprises covering the top opening **(100)** of the conveyor stack **(88)** with a top end wall **(106)** configured to restrict airflow **(200)** in the vertical direction from the second sub-chamber **(162)** directly into the volume of the central space **(98);** and
substantially restricting the airflow **(200)** in the vertical direction through the bottom opening **(102)** of the conveyor stack **(88)** comprises covering the bottom opening **(102)** of the conveyor stack **(88)** with a bottom end wall **(108)** configured to restrict airflow **(200)** in the vertical direction from the volume of the central space (98) directly into the first sub-chamber (160).

## Patentansprüche

1. Wärmeübertragungssystem (50) zum Ändern einer Temperatur eines Produkts mit Luftstrom (200), wobei das System umfasst:
ein Förderband (82) zum Tragen des Produkts, wobei das Förderband (82) eine luftdurchlässige äußere Seitenwand (105) und eine luftdurchlässige innere Seitenwand (104) aufweist und einen Förderstapel (88) mit einer Vielzahl von Etagen (86) und einem zentralen Raum (98) mit einem Volumen bildet, wobei der Förderstapel (88) in einer Kammer (54) so angeordnet ist, dass ein erster Abschnitt (204) des Volumens des zentralen Raums (98) und eine erste Vielzahl von Etagen (94) der Vielzahl von Etagen (86) in einer ersten Teilkammer (160) der Kammer (54) angeordnet sind und ein zweiter Abschnitt (206) des Volumens des zentralen Raums (98) und eine zweite Vielzahl von Etagen (96) der Vielzahl von Etagen (86) in einer zweiten Teilkammer (162) der Kammer (54) angeordnet sind;
ein Leitblech (202), das die Kammer (54) in die erste Teilkammer (160) und die zweite Teilkammer (162) unterteilt, wobei das Leitblech (202) an den Förderstapel (88) gekoppelt ist und dazu ausgelegt ist, den Luftstrom (200) in einer vertikalen Richtung direkt zwischen der ersten Teilkammer (160) und der zweiten Teilkammer (162) mit der Ausnahme des Volumens des zentralen Raums (98) zwischen dem zweiten Abschnitt (206) des Volumens des zentralen Raums (98) und dem ersten Abschnitt (204) des Volumens des zentralen Raums (98) wesentlich zu beschränken; und
Erzeugungsmittel (180) zum Erzeugen des Luftstroms (200) in der Kammer (54), wobei das Erzeugungsmittel (180) umfasst:
ein Luftstromerzeugungsmittel (182), das in der zweiten Teilkammer (162) angeordnet ist und dazu ausgelegt ist, den Luftstrom (200) zu erzeugen und den Luftstrom (200) in einer horizontalen Richtung zu dem Förderstapel (88) zu leiten, so dass der Luftstrom (200) in einer horizontalen und radialen Richtung über die zweite Vielzahl von Etagen (96) strömt, um in den zweiten Abschnitt (206) des Volumens des zentralen Raums (98) einzutreten; und
Luftstromabzugsmittel (184), die in der ersten Teilkammer (160) angeordnet sind und dazu ausgelegt sind, den Luftstrom (200) in einer horizontalen Richtung von dem Förderstapel (88) weg zu ziehen, so dass der Luftstrom (200) in einer horizontalen und radialen Richtung strömt, um den ersten Abschnitt (204) des Volumens des zentralen Raums (98) über die erste Vielzahl von Etagen (94) zu verlassen.

2. System (50) nach Anspruch 1, ferner umfassend wenigstens eines von einer oberen Endwand (106), dazu ausgelegt, den Luftstrom (200) in einer vertikalen Richtung durch eine obere Öffnung (100) des Förderstapels (88) zu beschränken, und einer unteren Endwand (108), dazu ausgelegt, den Luftstrom (200) in einer vertikalen Richtung durch eine untere Öffnung (102) des Förderstapels (88) zu beschränken.

3. System (50) nach Anspruch 2, wobei die obere Endwand (106) ferner den Luftstrom (200) in einer vertikalen Richtung von der zweiten Teilkammer (162) direkt in das Volumen des zentralen Raums (98) beschränkt.

4. System (50) nach Anspruch 2 oder 3, wobei die untere Endwand (108) ferner den Luftstrom (200) in einer vertikalen Richtung von dem Volumen des zentralen Raums (98) direkt in die erste Teilkammer (160) beschränkt.

5. System (50) nach einem der Ansprüche 1-4, wobei das Förderband (82) aus einer Vielzahl von Bandmodulen gebildet ist, wobei jedes Bandmodul (130) der Vielzahl von Bandmodulen umfasst:
einen zentralen Abschnitt (132) zum Tragen des Produkts, wobei sich der zentrale Abschnitt (132) zwischen einer inneren Seitenkante (134) des Bandmoduls (130) und einer äußeren Seitenkante (134) des Bandmoduls (130) erstreckt;
eine innere Seitenplatte (142), die mit dem zentralen Abschnitt (132) nahe der inneren Seitenkante (134) gekoppelt ist; und
eine äußere Seitenplatte (144), die mit dem zentralen Abschnitt (132) nahe der äußeren Seitenkante (136) gekoppelt ist.

6. System (50) nach Anspruch 5, wobei die äußere Seitenplatte (144) und die innere Seitenplatte (142) jeweils mindestens eine Öffnung (146) aufweisen, um den Luftstrom (200) in der horizontalen und radialen Richtung über die Vielzahl von Etagen (86) zu ermöglichen.

7. System (50) nach Anspruch 5 oder 6, wobei die äußere Seitenplatte (144) der Vielzahl von Bandmodulen die luftdurchlässige äußere Seitenwand (105) des Förderbands (82) bildet.

8. System (50) nach einem der Ansprüche 5-7, wobei die innere Seitenplatte (142) der Vielzahl von Bandmodulen die luftdurchlässige innere Seitenwand (104) des Förderbands (82) bildet.

9. System (50) nach einem der Ansprüche 5-8, wobei der zentrale Abschnitt (132) eine luftdurchlässige Konfiguration aufweist, um den Luftstrom (200) in einer vertikalen Richtung durch den zentralen Abschnitt (132) zwischen verschiedenen Etagen der Vielzahl von Etagen (86) zu ermöglichen.

10. System (50) nach einem der Ansprüche 5-8, wobei der zentrale Abschnitt (132) eine luftundurchlässige Konfiguration aufweist, um den Luftstrom (200) in einer vertikalen Richtung durch den zentralen Abschnitt (132) zwischen verschiedenen Etagen der Vielzahl von Etagen (86) wesentlich zu beschränken.

11. System (50) nach einem der Ansprüche 5-10, wobei das Leitblech (202) ferner dazu ausgelegt ist, den Luftstrom (200) in einer vertikalen Richtung an einer Grenzfläche zwischen der zweiten Vielzahl von Etagen (96) und der ersten Vielzahl von Etagen (94) wesentlich zu beschränken.

12. System (50) nach einem der Ansprüche 1-11, ferner umfassend eine Antriebstrommel (250), die innerhalb des zentralen Raums (98) angeordnet und dazu ausgelegt ist, mit der inneren Seitenwand (104) des Förderbands (82) in Eingriff zu stehen, wobei die Antriebstrommel (250) eine luftdurchlässige Seitenwand umfasst, die dazu ausgelegt ist, mit der luftdurchlässigen inneren Seitenwand (104) und der luftdurchlässigen äußeren Seitenwand (105) des Förderbands (82) zusammenzuwirken, um den Luftstrom (200) in der horizontalen und radialen Richtung über die Vielzahl von Etagen (86) zu ermöglichen.

13. Verfahren zum Ändern einer Temperatur eines Produkts, das auf einem Förderband (82) getragen wird, das in einem Wärmeübertragungssystem (50) enthalten ist, wobei das Förderband eine luftdurchlässige äußere Seitenwand (105) und eine luftdurchlässige innere Seitenwand (104) aufweist und einen Förderstapel (88) mit einer Vielzahl von Etagen (86) und einem zentralen Raum (98) mit einem Volumen bildet, wobei der Förderstapel (88) in einer Kammer (54) des Wärmeübertragungssystems angeordnet ist, wobei das Verfahren umfasst:
Erzeugen, über ein Luftstromerzeugungsmittel (182) eines luftstromerzeugenden Mittels (180) des Systems (50), das in einer zweiten Teilkammer (162) der Kammer (54) angeordnet ist, des Luftstroms (200) in einer horizontalen Richtung zu dem Förderstapel (88), so dass der Luftstrom (200) in der zweiten Teilkammer (162) in einer horizontalen und radialen Richtung über eine zweite Vielzahl von Etagen (96) der Vielzahl von Etagen (86) fließt, um in einen zweiten Abschnitt (206) des Volumens des zentralen Raums (98) einzutreten; und
Ziehen des Luftstroms (200) über ein Luftstromabzugsmittel (184) des luftstromerzeugenden Mittels (180), das in einer ersten Teilkammer (160) der Kammer (54) angeordnet ist, in einer horizontalen Richtung weg von dem Förderstapel (88), so dass der Luftstrom (200) in der ersten Teilkammer (160) in einer horizontalen und radialen Richtung strömt, um einen ersten Abschnitt (204) des Volumens des zentralen Raums (98) über eine erste Ebene (94) einer Vielzahl von Etagen (86) zu verlassen,
wobei ein Leitblech des Systems (50) und gekoppelt mit dem Förderstapel (88 204) dazu ausgelegt ist, die Kammer (54) in die erste Teilkammer (160) und die zweite Teilkammer (162) zu unterteilen und den Luftstrom (200) in einer vertikalen Richtung direkt zwischen der ersten Teilkammer (160) und der zweiten Teilkammer (162) mit der Ausnahme innerhalb des Volumens des zentralen Raums (98) zwischen dem zweiten Abschnitt (206) und dem ersten Abschnitt (98) des Volumens des zentralen Raumes (98) zu beschränken.

14. Verfahren nach Anspruch 13, ferner umfassend wenigstens eines von:
wesentliches Begrenzen des Luftstroms (200) in einer vertikalen Richtung durch eine obere Öffnung (100) des Förderstapels (88) in der zweiten Teilkammer (162), um dem Luftstrom (200) in der horizontalen und radialen Richtung über die zweite Vielzahl von Etagen (96) zu ermöglichen, in den zweiten Abschnitt (206) des Volumens des zentralen Raums (98) einzutreten; und
wesentliches Begrenzen des Luftstroms (200) in einer vertikalen Richtung durch eine Bodenöffnung (102) des Förderstapels (88) in der ersten Teilkammer (160), um dem Luftstrom (200) in der horizontalen und radialen Richtung zu ermöglichen, den ersten Abschnitt (204) des Volumens des zentralen Raums (98) über die erste Vielzahl von Etagen (94) zu verlassen.

15. Verfahren nach Anspruch 14, wobei:
wesentliches Begrenzen des Luftstroms (200) in der vertikalen Richtung durch die obere Öffnung (100) des Förderstapels (88) Abdecken der oberen Öffnung (100) des Förderstapels (88) mit einer oberen Endwand (106) umfasst, die dazu ausgelegt ist, den Luftstrom (200) in der vertikalen Richtung von der zweiten Teilkammer (162) direkt in das Volumen des zentralen Raums (98) zu begrenzen; und
wesentliches Begrenzen des Luftstroms (200) in der vertikalen Richtung durch die Bodenöffnung (102) des Förderstapels (88) Abdecken der Bodenöffnung (102) des Förderstapels (88) mit einer unteren Endwand (108) umfasst, die dazu ausgelegt ist, den Luftstrom (200) in der vertikalen Richtung von dem Volumen des zentralen Raums (98) direkt in die erste Teilkammer (160) zu begrenzen.

## Revendications

1. Système de transfert de chaleur (50) destiné à modifier une température de produit avec un flux d'air (200), le système comprenant :
une bande transporteuse (82) destinée à transporter le produit, la bande transporteuse (82) ayant une paroi latérale externe perméable à l'air (105) et une paroi latérale interne perméable à l'air (104), et formant un empilement transporteur (88) ayant une pluralité de niveaux (86) et un espace central (98) avec un volume, l'empilement transporteur (88) étant positionné dans une chambre (54) de telle sorte qu'une première partie (204) du volume de l'espace central (98) et une première pluralité de niveaux (94) de la pluralité de niveaux (86) sont situées dans une première sous-chambre (160) de la chambre (54) et une deuxième partie (206) du volume de l'espace central (98) et une deuxième pluralité de niveaux (96) de la pluralité de niveaux (86) sont situées dans une deuxième sous-chambre (162) de la chambre (54) ;
un déflecteur (202) divisant la chambre (54) en la première sous-chambre (160) et la deuxième sous-chambre (162), le déflecteur (202) étant couplé à l'empilement transporteur (88) et conçu pour limiter sensiblement le flux d'air (200) dans une direction verticale directement entre la première sous-chambre (160) et la deuxième sous-chambre (162), excepté à l'intérieur du volume de l'espace central (98) entre la deuxième partie (206) du volume de l'espace central (98) et la première partie (204) du volume de l'espace central (98) ; et
des moyens de génération (180) destinés à générer le flux d'air (200) dans la chambre (54), les moyens de génération (180) comprenant :
des moyens de production de flux d'air (182) situés dans la deuxième sous-chambre (162) et conçus pour produire le flux d'air (200) et diriger le flux d'air (200) dans une direction horizontale vers l'empilement transporteur (88), de telle sorte que le flux d'air (200) s'écoule dans une direction horizontale et radiale à travers la deuxième pluralité de niveaux (96) pour entrer dans la deuxième partie (206) du volume de l'espace central (98) ; et
des moyens d'aspiration de flux d'air (184) situés dans la première sous-chambre (160) et conçus pour aspirer le flux d'air (200) dans une direction horizontale s'éloignant de l'empilement transporteur (88), de telle sorte que le flux d'air (200) s'écoule dans une direction horizontale et radiale pour sortir de la première partie (204) du volume de l'espace central (98) à travers la première pluralité de niveaux (94).

2. Système (50) de la revendication 1, comprenant en outre une paroi d'extrémité supérieure (106) conçue pour limiter le flux d'air (200) dans une direction verticale par une ouverture supérieure (100) de l'empilement transporteur (88) et/ou une paroi d'extrémité inférieure (108) conçue pour limiter le flux d'air (200) dans une direction verticale par une ouverture inférieure (102) de l'empilement transporteur (88).

3. Système (50) de la revendication 2, dans lequel la paroi d'extrémité supérieure (106) limite en outre le flux d'air (200) dans une direction verticale depuis la deuxième sous-chambre (162) directement à l'intérieur du volume de l'espace central (98).

4. Système (50) de la revendication 2 ou 3, dans lequel la paroi d'extrémité inférieure (108) limite en outre le flux d'air (200) dans une direction verticale depuis le volume de l'espace central (98) directement à l'intérieur de la première sous-chambre (160).

5. Système (50) de l'une quelconque des revendications 1 à 4, dans lequel la bande transporteuse (82) est constituée d'une pluralité de modules de bande, chaque module de bande (130) de la pluralité de modules de bande comprenant :
une partie centrale (132) destinée à transporter le produit, la partie centrale (132) s'étendant entre un bord latéral interne (134) du module de bande (130) et un bord latéral externe (134) du module de bande (130) ;
une plaque latérale interne (142) couplée à la partie centrale (132) à proximité du bord latéral interne (134) ; et
une plaque latérale externe (144) couplée à la partie centrale (132) à proximité du bord latéral externe (136).

6. Système (50) de la revendication 5, dans lequel la plaque latérale externe (144) et la plaque latérale interne (142) comportent chacune au moins une ouverture (146) pour laisser passer le flux d'air (200) dans la direction horizontale et radiale à travers la pluralité de niveaux (86).

7. Système (50) de la revendication 5 ou 6, dans lequel la plaque latérale externe (144) de la pluralité de modules de bande forme la paroi latérale externe perméable à l'air (105) de la bande transporteuse (82).

8. Système (50) de l'une quelconque des revendications 5 à 7, dans lequel la plaque latérale interne (142) de la pluralité de modules de bande forme la paroi latérale interne perméable à l'air (104) de la bande transporteuse (82).

9. Système (50) de l'une quelconque des revendications 5 à 8, dans lequel la partie centrale (132) a une configuration perméable à l'air pour faciliter le flux d'air (200) dans une direction verticale par la partie centrale (132) entre différents niveaux de la pluralité de niveaux (86).

10. Système (50) de l'une quelconque des revendications 5 à 8, dans lequel la partie centrale (132) a une configuration imperméable à l'air pour limiter sensiblement le flux d'air (200) dans une direction verticale par la partie centrale (132) entre différents niveaux de la pluralité de niveaux (86).

11. Système (50) de l'une quelconque des revendications 5 à 10, dans lequel le déflecteur (202) est en outre conçu pour limiter sensiblement le flux d'air (200) dans une direction verticale au niveau d'une interface entre la deuxième pluralité de niveaux (96) et la première pluralité de niveaux (94).

12. Système (50) de l'une quelconque des revendications 1 à 11 comprenant en outre un tambour d'entraînement (250) positionné à l'intérieur de l'espace central (98) et conçu pour entrer en prise avec la paroi latérale interne (104) de la bande transporteuse (82), le tambour d'entraînement (250) comprenant une paroi latérale perméable à l'air conçue pour coopérer avec la paroi latérale interne perméable à l'air (104) et la paroi latérale externe perméable à l'air (105) de la bande transporteuse (82) pour faciliter le flux d'air (200) dans la direction horizontale et radiale à travers la pluralité de niveaux (86).

13. Procédé destiné à modifier une température de produit transporté sur une bande transporteuse (82) comprise dans un système de transfert de chaleur (50), ladite bande transporteuse ayant une paroi latérale externe perméable à l'air (105) et une paroi latérale interne perméable à l'air (104), et formant un empilement transporteur (88) ayant une pluralité de niveaux (86) et un espace central (98) avec un volume, l'empilement transporteur (88) étant positionné dans une chambre (54) dudit système de transfert de chaleur, le procédé comprenant :
la production, par le biais de moyens de production de flux d'air (182) de moyens de génération de flux d'air (180) dudit système (50) et situés dans une deuxième sous-chambre (162) de la chambre (54), du flux d'air (200) dans une direction horizontale vers l'empilement transporteur (88), de telle sorte que le flux d'air (200) dans la deuxième sous-chambre (162) s'écoule dans une direction horizontale et radiale à travers une deuxième pluralité de niveaux (96) de la pluralité de niveaux (86) pour entrer dans une deuxième partie (206) du volume de l'espace central (98) ; et
l'aspiration, par le biais de moyens d'aspiration de flux d'air (184) desdits moyens de génération de flux d'air (180) et situés dans une première sous-chambre (160) de la chambre (54), du flux d'air (200) dans une direction horizontale s'éloignant de l'empilement transporteur (88), de telle sorte que le flux d'air (200) dans la première sous-chambre (160) s'écoule dans une direction horizontale et radiale pour sortir d'une première partie (204) du volume de l'espace central (98) à travers une première pluralité de niveaux (94) de la pluralité de niveaux (86),
un déflecteur dudit système (50) et couplé à l'empilement transporteur (88) étant conçu pour diviser la chambre (54) en la première sous-chambre (160) et la deuxième sous-chambre (162) et pour limiter sensiblement le flux d'air (200) dans une direction verticale directement entre la première sous-chambre (160) et la deuxième sous-chambre (162), excepté à l'intérieur du volume de l'espace central (98) entre la deuxième partie (206) du volume de l'espace central (98) et la première partie (204) du volume de l'espace central (98).

14. Procédé de la revendication 13, comprenant en outre au moins une des opérations suivantes :
limitation sensible du flux d'air (200) dans une direction verticale par une ouverture supérieure (100) de l'empilement transporteur (88) dans la deuxième sous-chambre (162) pour faciliter le flux d'air (200) dans la direction horizontale et radiale à travers la deuxième pluralité de niveaux (96) afin qu'il entre dans la deuxième partie (206) du volume de l'espace central (98) ; et
limitation sensible du flux d'air (200) dans une direction verticale par une ouverture inférieure (102) de l'empilement transporteur (88) dans la première sous-chambre (160) pour faciliter le flux d'air (200) dans la direction horizontale et radiale afin qu'il sorte de la première partie (204) du volume de l'espace central (98) à travers la première pluralité de niveaux (94).

15. Procédé de la revendication 14, dans lequel :
la limitation sensible du flux d'air (200) dans la direction verticale par l'ouverture supérieure (100) de l'empilement transporteur (88) comprend le recouvrement de l'ouverture supérieure (100) de l'empilement transporteur (88) avec une paroi d'extrémité supérieure (106) conçue pour limiter le flux d'air (200) dans la direction verticale depuis la deuxième sous-chambre (162) directement à l'intérieur du volume de l'espace central (98) ; et
la limitation sensible du flux d'air (200) dans la direction verticale par l'ouverture inférieure (102) de l'empilement transporteur (88) comprend le recouvrement l'ouverture inférieure (102) de l'empilement transporteur (88) avec une paroi d'extrémité inférieure (108) conçue pour limiter le flux d'air (200) dans la direction verticale depuis le volume de l'espace central (98) directement à l'intérieur de la première sous-chambre (160).
